# EUROPEAN PATENT APPLICATION

(11) **EP 4 001 083 A1**
(43) Date of publication of application: **25.05.2022**
(21) Application number: 21209937.8
(22) Date of filing: 23.11.2021
(51) Int. Cl.: B62M 11/16, B62M 25/04, B62M 25/08, B62M 9/10

(54) **MECHANICAL SHIFT INTERFACE**

(30) Priority: 23.11.2020 NL 2026956
(71) Applicant: Classified Cycling BV, 2300 Turnhout (BE)
(72) Inventor: VAN DRUTEN, Roëll Marie, 2300 Turnhout (BE)
(74) Representative: V.O.

(57) **Abstract**

The invention relates to a mechanical shift interface for between a manual shifter and a shifting device of a bicycle transmission. The shift interface comprises a housing and an input mechanism, provided in the housing, which input mechanism is configured for coupling to a shifter cable of the manual shifter, wherein the input mechanism is movable within the housing by operation of the shifter cable between a first state and a second state. The shift interface comprises a detector, provided in the housing, wherein the detector is arranged to detect whether the input mechanism is in the first state or the second state, and/or a transition of the input mechanism between the first state and the second state.

## Description

### FIELD

The invention relates to a gear shifting mechanism for shifting gears on a bicycle. More in particular, the invention relates to a mechanical shift interface for between a manual shifter and a shifting device of a bicycle transmission. The invention particularly relates to a shift interface for converting a mechanical shift operation of a manual shifter to an electronic signal for use in effecting a gear shift in a transmission of a bicycle.

### BACKGROUND

Gear shifting systems for bicycles typically comprise a manual shifter mounted on a handlebar of the bicycle for allowing a cyclist to manually command a gear shift while riding the bicycle. The gear shift command is transmitted to a shifting device at or near the bicycle's transmission, for executing the gear shift.

In traditional gear shifting systems, typically on racing bicycles, the shifting device includes a derailleur, for example a front derailleur and/or a rear derailleur. An alternative to a derailleur setup is formed by a gear hubs, in which gearing and a dedicated shifting device are accommodated inside a wheel hub of the bicycle, typically of the rear wheel.

A hybrid setup is also known, including a traditional rear cassette of sprockets and associated rear derailleur as well as a gear hub having at least two gear ratios coupled between the rear cassette of sprockets and the wheel hub.

It is envisioned that bicycles with a traditional front and rear derailleur setup may be retrofitted with a gear hub, so as to obtain a hybrid setup wherein the gear hub functionally replaces the front derailleur.

However, the shifting system of the bicycle to be retrofitted may not be compatible with the shifting device of the gear hub.

In particular, a gear shift command of the manual shifter may be transmitted to the shifting device either mechanically, in which the manual shifter comprises a cable winding device for winding and unwinding a shifter cable, e.g. a Bowden cable, that extends and transmits mechanical power from the manual shifter to the bicycle's shifter device to execute a gear shift, or electronically, in which the manual shifter includes one or more buttons, wherein a signal is transmitted electronically, either by wire or wirelessly, to the bicycle's shifting device to execute a gear shift upon actuation of any of the buttons.

Due to the limited space in the rear wheel hub, gear hubs can advantageously be electronically controlled.

The mechanical and electronical shifting systems require dedicated components which are often not mutually compatible. Accordingly, retrofitting a bicycle with a mechanical shifting system with an electronically controlled gear hub would require a complete transition to an electronic shifting system. This can be cumbersome and is often associated with a substantial financial investment.

### SUMMARY

It is an object to provide compatibility between a mechanical shifting system and an electronically controlled gear hub. Alternatively, or additionally, it is an object to provide a shift interface for between a manual shifter and a shifting device of a bicycle. Alternatively, or additionally, it is an object to provide a shift interface for between a mechanical manual shifter and an electronic shifting device of a bicycle.

In a first aspect there is accordingly provided a mechanical shift interface for between a manual shifter and a shifting device of a bicycle transmission, comprising a housing, and an input mechanism provided in the housing. The input mechanism is configured for coupling to a shifter cable of the manual shifter. The input mechanism can be configured to couple to an end of a shifter cable of a manual shifter. The end of the shifter cable can be positioned inside the housing. The input mechanism is movable within the housing by operation of the shifter cable between a first state and a second state. The mechanical shift interface includes a detector, provided in the housing, wherein the detector is arranged to detect whether the input mechanism is in the first state or the second state, and/or a transition of the input mechanism between the first state and the second state. The mechanical shift interface could thus convert a mechanical input command of the manual shifter to an electronic output signal for operating an electronically controlled shifting device. This way, a bicycle can for example be retrofitted with an electronically controlled gear hub, replacing the front derailleur, wherein the manual shifter for operating the original front derailleur can be used to operate the gear hub. The manual shifter thus does not need replacement. For example, similar to the original front derailleur setup, the first state of the input mechanism can be associated with a first transmission gear of the gear hub, and the second state of the input mechanism can be associated with a second transmission gear of the gear hub. The input mechanism may assume more than two states, for example three states or more. The input mechanism can be movable within the housing by operation of the shifter cable between the first state, the second state and one or more further states, and the detector can be arranged to detect in which state, of the first, second and one or more further states, the input mechanism is, and/or a between which states, of the first, second and one or more further states, the input mechanism transitions. Further, the mechanical shift interface enables for operating electronically controlled derailleurs with a mechanical shifter.

Optionally, the detector is arranged to generate an electronic output signal upon detecting the input mechanism in the first state or detecting the input mechanism in the second state, and/or a transition of the input mechanism between the first state and the second state. The electronic output signal can for example be generated by closing or opening an electrical contact to open or close an electric pathway. For instance, an electrical contact may be opened in case the input mechanism is transitioned to the first state, wherein the electrical contact may be closed in case the input mechanism is transitioned to the second state. In this exemplary situation, the shift interface not transmitting a signal to the shifting device could indicate that the input mechanism assumes the first state. The electronic signal can be transmitted, e.g. by wire and/or wirelessly, to the shifting device. The shift interface may for example comprise an output connector, e.g. a jack port for connecting to a wired jack plug. A wireless transmitter may be provided to wirelessly transmit the electronic signal to a wireless receiver of the shifting device.

Optionally, the electronic output signal comprises an analog electric signal. The analog electric signal may be transmitted to the bicycle's shifting device by wire. Optionally, the analog electric signal is transmitted to a wireless transmitter, wherein the analog electric signal is converted to wireless electronic signal that is wirelessly transmitted to the shifting device.

Optionally, the detector is arranged to generate a first output signal upon detecting the input mechanism in the first state, and a second output signal upon detecting the input mechanism in the second state; and/or wherein the detector is arranged to generate a first output signal upon detecting a transition of the input mechanism from the first state to the second state, and a second output signal upon detecting a transition of the input mechanism from the second state to the first state.

Optionally, the mechanical shift interface comprises a transmitter arranged for transmitting a wireless output signal.

Optionally, the transmitter is arranged in the housing. This provides a compact setup that is easy to mount on a bicycle. The housing may be arranged to be mounted to a handlebar of the bicycle, for instance, shaped to be provided between the handle bar and a handle bar wrapper. It is envisioned that the transmitter is arranged in a separate transmitter housing, separate from the housing in which the detector and the input mechanism are provided. The separate transmitter housing may be arranged to be mounted inside a handlebar of a bicycle.

Optionally, the detector comprises a detector switch, e.g. a two-way detector switch. The switch may be arranged to detect whether the input mechanism is in the first state or the second state, and/or a transition of the input mechanism between the first state and the second state. For example, the switch may be manipulated when the input mechanism transits from the first state to the second state and vice versa. The switch may be a mechanical switch, arranged to mechanically interact with the input mechanism, wherein the switch is arranged to generate an electric output signal on a mechanical interaction with the input mechanism. The switch may for example be embodied as a toggle switch, a rotary switch, a push button, a limit switch, or other type of switch.

Optionally, the detector switch comprises an actuation organ, wherein the input mechanism is arranged to mechanically interact with the actuation organ so as to actuate the detector switch when transitioning between the first state and the second state.

Optionally, the actuation organ is biased in a neutral position and moveable out of the neutral position, wherein an engaging body of the input mechanism is arranged to, when transitioning between the first state and the second state, move the actuation organ out of its neutral position and subsequently release the actuation organ for allowing the actuation organ to return to the neutral position.

Optionally, the detector switch is a two-way detector switch, wherein the actuation organ is biased in the neutral position and moveable out of the neutral position in two opposing directions.

Optionally, the actuation organ includes a pivotable actuation arm.

Optionally, the input mechanism comprises an input member for connection to the shifter cable, wherein the input member is translatable relative to the housing, by operation of the shifter cable, between a first position which corresponds to the first state of the input mechanism, and a second position which corresponds to the second state of the input mechanism. The input member may comprise an input connector arranged for coupling to a shifter cable. The input member may be biased the first position or the second position, for example by means of a spring that is arranged between the housing and the input member. The first position of the input member is for example associated with a tightened shifter cable, tightened by the manual shifter, and the second position with a loosened shifter cable, wherein the input member is biased towards the second position. The housing may be provided with a guide track for guiding the translation of the input member between the first position and the second position.

Optionally, the input mechanism comprises a lever defining an input lever arm connected to the input member and an output lever arm for engaging the actuating organ, and wherein the lever is pivotally arranged in the housing for transforming a translational motion of the input member between the first position and the second position into a pivotal motion of the output lever arm between respectively a first angular position and a second angular position. It will be appreciated that the input lever arm and the output lever arm denote functional distance measures of the lever, not bound to a shape or size of the lever. This way, a translation of the input member between the first position and the second position, is transformed into an angular deflection of the output lever arm between respectively a first angular position and a second angular position. The first angular position and the second angular position may correspond to respectively the first state and the second state of the input mechanism.

Optionally, the input lever arm is shorter than the output lever arm. This way, the pivot amplitude of the input lever arm is amplified, to cause a desirable pivot amplitude of the output lever arm.

Optionally, a distance between a pivot axis of the actuation arm of the detector switch and a pivot axis of the output lever arm is smaller than a sum of a length of the output lever arm and a length of the actuation arm. This way, a pivot range of the output lever arm and a pivot range of the actuation arm partly overlap, such that the actuation arm can be approached and engaged by the output lever arm from opposite sides to distinguish between the transition directions between the first and second state. For example, when the output lever arm is pivoted from the first angular position towards the second angular position, the output lever arm can engage and entrain the actuation arm, e.g. actuating the switch in a first direction, wherein the output lever arm subsequently can release the actuation arm and pivot further past the actuation arm to the second angular position. In the opposite direction, when the output lever arm is pivoted from the second angular position towards the first angular position, the output lever arm can engage and entrain the actuation arm, e.g. actuating the switch in a second direction, wherein the output lever arm can release the actuation arm and pivot further past the actuation arm to the first angular position.

Optionally, the input mechanism includes a cam track and a cam follower cooperating with the cam track.

Optionally, the cam track is formed by the input lever arm, and the cam follower is formed by the input member. The cam track may for example be formed by a slot.

Optionally, the cam track includes a first notched section in which the cam follower is received when the input mechanism is in the first state, and a second notched section in which the cam follower is received when the input mechanism is in the second state. The notched section could facilitate maintaining the input mechanism in its respective state, and could provide a cyclist with tactile feedback when shifting gears.

Optionally, the first notched section is formed at a first end of the cam track, and the cam track includes a second end opposite the first end, wherein a buffer section of the cam track is provided between the second end and the second notched section for accommodating a motion of the cam follower from the first end towards the second end beyond the second notched section. This accounts for possible overtightening of the shifter cable, making the setup more robust.

Optionally, a translation of the input member from the first position to the second position corresponds to a shifter cable tension increase, and a translation of the input member from the second position to the first position corresponds to a shifter cable tension decrease, wherein the input member is spring biased towards the first position.

Optionally, the mechanical shift interface comprises a first end stop for blocking a translation of the input member in a direction from the second position towards the first position beyond the first position. This could prevent possible damage to the shift interface, when overtightening or overloosening the shifter cable beyond the translation range of the input member.

Optionally, the mechanical shift interface comprises a second end stop, opposite the first end stop, for blocking a translation of the input member, wherein the second end stop is located a distance beyond the second position of the input member so as to accommodate for an over-tensioning of the shifter cable. This could prevent possible damage to the shift interface, when overtightening or overloosening the shifter cable beyond the translation range of the input member.

Optionally, a translation range between the first position and the second position of the input member is within a range of 0.5-2.5 mm, preferably of 1-2 mm more preferably from 1.5-1.7 mm.

Optionally, the mechanical shift interface comprises a damper for damping the pivotal motion of the lever.

Optionally, the mechanical shift interface is arranged to be mounted to a handlebar of a bicycle.

Optionally, the mechanical shift interface is arranged to be mounted to a brake cable of a bicycle.

In a second aspect is provided a shifting system for a bicycle, comprising a manual shifter for operation by a user of the bicycle, the shifter including a shifter cable and a tensioning device for selectively tensioning and loosening the shifter cable; and a mechanical shift interface as described herein, wherein the shifter cable is connected to the input mechanism of the mechanical shift interface.

Optionally, the shifting system comprises a shifting device arranged for shifting gears in a transmission of the bicycle, wherein shifting device is electronically connected, e.g. wirelessly and/or by wire, with the mechanical shift interface.

In a third aspect is provided a bicycle comprising a mechanical shift interface or a shifting system as described herein.

It will be appreciated that all features and options mentioned in view of the mechanical shift interface apply equally to the shifting system and bicycle, and vice versa. It will also be clear that any one or more of the above aspects, features and options can be combined.

### BRIEF DESCRIPTION OF THE DRAWINGS

Embodiments of the present invention will now be described in detail with reference to the accompanying drawings in which:
Fig. 1 shows perspective view of an exemplary mechanical shift interface;
Fig. 2A shows an exploded view of the mechanical shift interface;
Fig. 2B shows an exploded view of an interface assembly of the mechanical shift interface including an input mechanism;
Figs. 3A and 3B show a top view of the interface assembly, wherein the input mechanism is in respectively an first state and a second state;
Figs. 4A, 4B, 4C show an input member of the input mechanism in respectively a perspective view, a top view and a frontal view;
Figs. 5A, 5B, 5C, show a lever of the input mechanism in respectively a perspective view, a top view and a frontal view;
Figs. 6A and B show respectively a top view and a frontal view of a detector switch for the mechanical shift interface.

### DETAILED DESCRIPTION

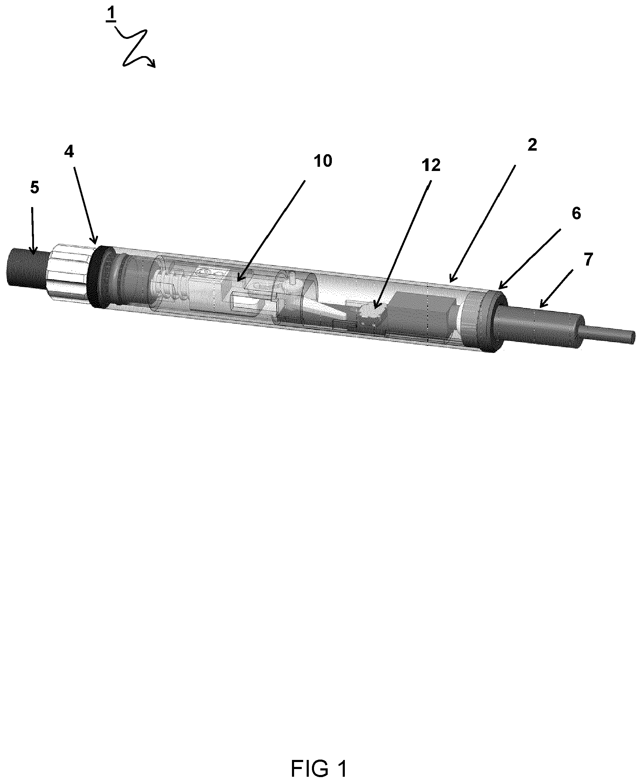

Fig. 1 shows a perspective view of the mechanical shift interface 1 for a bicycle. The mechanical shift interface 1 comprises housing 2, here a tubular shaped housing, which is transparently depicted in Fig. 1 to show the internal components that are held by the housing 2. The housing 2 is preferably water tight to protect the internal components held by the housing 2. The mechanical shift interface 1 has an input port 4, here formed by a shifter cable connector connected to a shifter cable 5. As can be seen in Fig. 1 the shifter cable 5 ends inside the housing 2. The shifter cable 5 is operated by a cyclist, by means of a manual shifter that is often conveniently mounted to a handle bar of the bicycle. The cyclist can command a gear shift by operating the manual shifter, by selectively tightening and loosing of the shifter cable 5. The gear shift command, e.g. a tightening or loosening of the shifter cable is mechanically transmitted to the input port 4, wherein the mechanical interface device 1 is arranged to convert the mechanical gear shift command to an electronic gear shift command.

The mechanical interface device 1 comprises an output port 6, here formed by a jack connector connected to a wired jack plug 7 for transmitting the electronic output signal to a shifting device at or near a transmission of the bicycle. The electronic output signal may be transmitted to the shifting device by wire and/or wirelessly. For example, the output signal may be an analog electric signal that is transmitted by wire to a wireless transmission device, which wireless transmission device further transmits the output signal to a wireless receiver of the shifting device at the bicycle's transmission.

Provided in the housing 2 is an input mechanism 10, which input mechanism 10 is movable within the housing 2 by operation of the shifter cable 5, between at least a first state and a second state. The first state associates with a first transmission gear of the bicycle's transmission and the second state associates with a second transmission gear. Also provided in the housing 2 is a detector 12, here a detector switch, arranged to detect the current state of the input mechanism 10 or a state transition of the input mechanism 10. For example, the detector 12 is arranged to detect whether the input mechanism 10 is in the first state or the second state. Additionally or alternatively, the detector may be arranged to detect a transition of the input mechanism 10 from the first state to the second state and/or vice versa. The detector 2 accordingly generates an electronic output signal that is indicative of or indicates a state, or state transition, of the input mechanism 10. It will be appreciated that the input mechanism may include further states, such as a third, fourth and fifth state, etc., that respectively correspond to a third, fourth and fifth transmission gear. The input mechanism 10 can be movable within the housing by operation of the shifter cable between the first state, the second state, the third state, the fourth state, the fifth state, etc.. The detector can be arranged to detect whether the input mechanism is in the first, second, third, fourth, fifth, etc. state. Additionally or alternatively, the detector may be arranged to detect a transition of the input mechanism 10 between the first, second, third, fourth, fifth, etc. states.

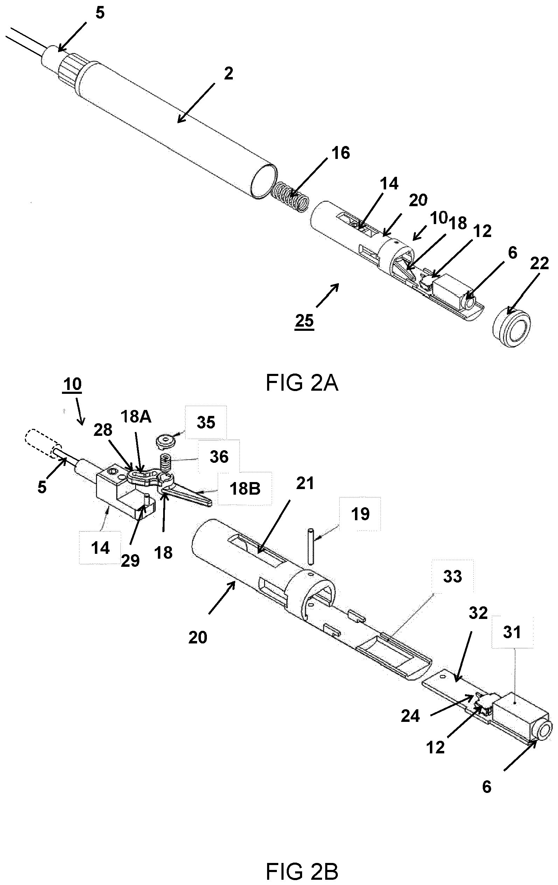

Fig. 2A shows an exploded view of the mechanical shift interface 1, including an interface assembly 25 that in turn comprises a frame 20 carrying the input mechanism 10 and the detector 12. The frame 20 is insertable into the housing 2, wherein it is fixed relative to the housing 2. Fig. 2B shows an exploded view of the interface assembly 25, wherein it can be seen that the input mechanism 10 comprises an input member 14, which is arranged for coupling to the shifter cable 5 and a lever 18 for cooperating with the input member 14. Here the input member 14 is connected to an end of the shifter cable. The end of the shifter cable 5 is positioned inside the housing 2.

The input member 14 is movably arranged in the frame 20, and is particularly translatable within the frame 20, and relative to the housing 2, in a an axial direction of the housing 2, between a first position and a second position. To this end, the frame 20 includes a guide slot 21 for guiding the translation of the input member 14 axially with respect to the housing 2. A spring 16, here a helical spring, biases the input member 14, in the first or second position, here the first position, corresponding to a loosened state of the shifter cable 5. The input member 14 is coupled to a lever 18, wherein the lever 18 is arranged to interact with the detector. A sealing plug 22 is provided to water tightly seal the mechanical shift interface 1, such that internal components thereof are shielded from the environment.

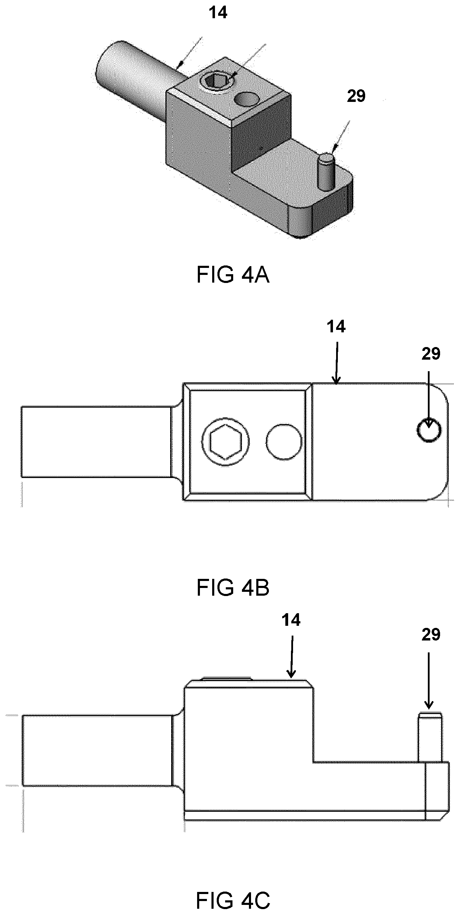

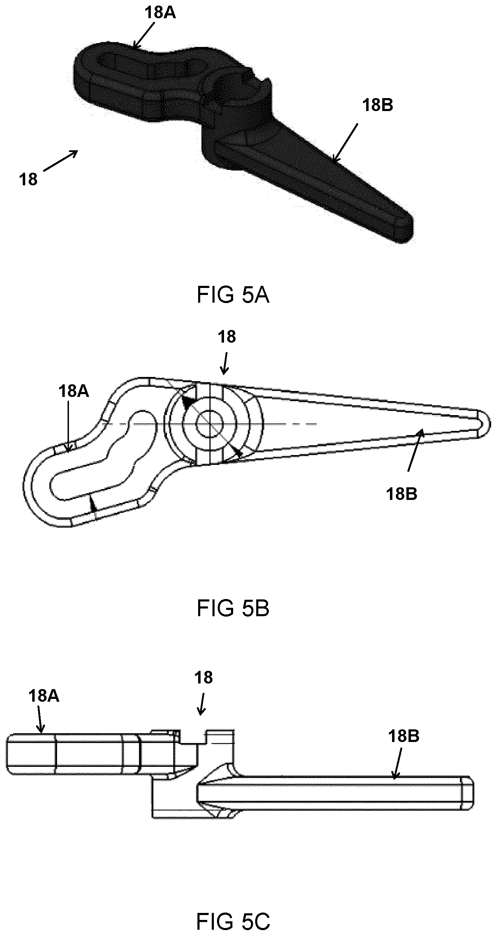

Figs. 4A, 4B, 4C show a close-up view of the input member 14. The input member 14 is coupled to a lever 18, wherein the lever 18 is arranged to interact with the detector. Figs. 5A, 5B, 5C shows a close-up view of the lever 18.

The input member 14 and the lever 18 of the input mechanism 10, are mechanically coupled, and configured to cooperate in such a way that a translational motion of the input member 14 is transformed into a pivotal motion of the lever 18. A translational motion of the input member 14 from the first position to the second position corresponds to a pivotal motion of the lever 18 from a first angular position to a second angular position. Similarly, a translational motion of the input member 14 from the second position to the first position corresponds to a pivotal motion of the lever 18 from the second angular position to the first angular position. The first state of the input mechanism 10 corresponds to the first position of the input member 14, and the first angular position of the lever 18; and the second state of the input mechanism 10 corresponds to the second position of the input member 14, and the second angular position of the lever 18.

The lever 18 is pivotally coupled to the frame 20 around a pivot axis defined by pivot shaft 19. The lever 18 defines an input lever arm 18A connected to the input member 14 and an output lever arm 18B for engaging an actuating organ 24 of the detector 12. The input lever arm 18A forms a cam track 28 therein, wherein a cam follower 29 of the input member 14 cooperates with the cam track 28. Accordingly, a translation of the input member 14, e.g. by tightening the shifter cable 5, causes the cam follower 29 to engage with cam track 28 of the input lever arm 18A to impose a pivotal motion on the lever 18 about the pivot shaft 19. This in turn pivots the output lever arm 18B of the lever 18, thereby manipulating the actuation arm 24 of the detector 12. The pivotal motion of the lever 18 about the pivot shaft 19 can be damped by a damper 35, wherein the lever 18 may be provided in the frame 20 by means of spring 36.

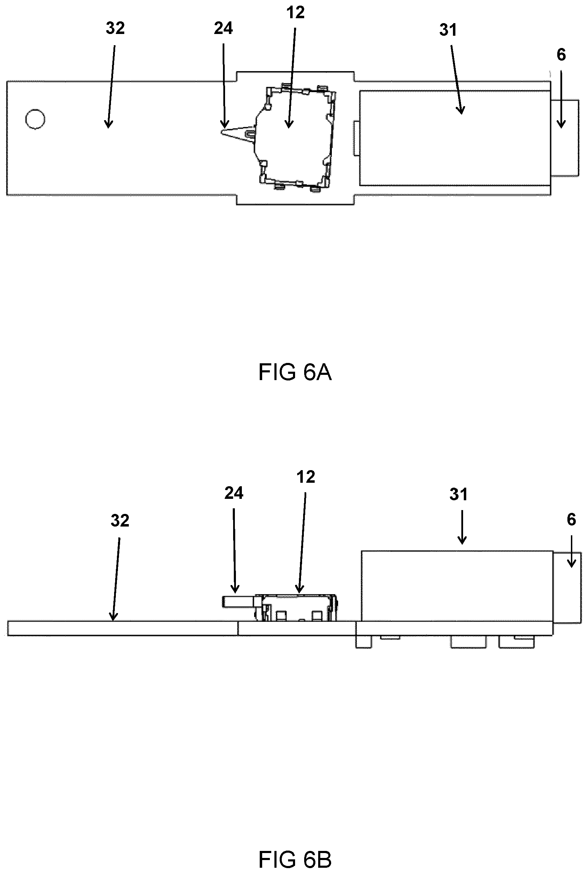

To facilitate the assembly of the mechanical switch interface, here, the detector 12, and the output connector 31 with the output port 6, is mounted on a detector plate 32, wherein the detector plate 32 can be slidebly received in a groove 33 of the frame 20, and coupled to the frame 20, e.g. by means of a snap connection. A close-up view of the detector 12, mounted on the detector plate 32 is shown in Figs. 6A and 6B.

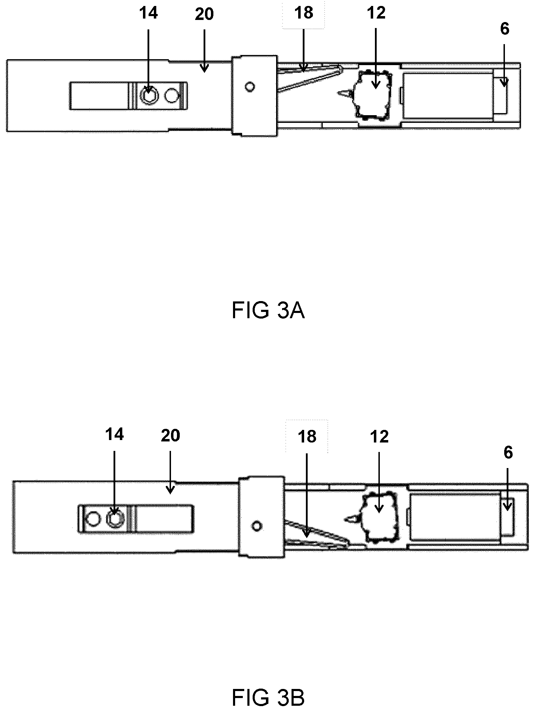

Figs. 3A and 3B show a top view of the interface assembly 25, in an assembled state. In Fig. 3A the input mechanism 10 is depicted in the first state, and in Fig. 3B the input mechanism 10 is depicted in the second state. Here, the second state of the input mechanism 10 corresponds to a tightened state of the shifter cable 5, such that the spring 16 is compressed. The first state, here, corresponds to a loosened shifter cable 5, wherein the spring 16 forces the input member 14 to the first position. Each time the input mechanism 10 transitions between the first state and the second state, the output lever arm 18B of the input mechanism 10 flicks the detector switch 12, causing the detector to output an electronic signal that is indictive of a gear shift. In this example, the detector 12 comprises an actuation lever that is biased in a neutral center position, wherein the actuation lever 24 is pivotable towards two opposing sides in a pivot plane in which the output lever arm 18B pivots. A distance between a pivot axis of the actuation arm 24 of the detector switch 12 and the pivot axis 19 of the output lever arm 18B is smaller than a sum of a length of the output lever arm 18B and a length of the actuation arm 24. Accordingly, angular pivot ranges of the output lever 18B and the actuation lever 24 partly overlap, such that the output lever arm 18B can engage and entrain the actuation lever 24 when transitioning between the first angular position to the second angular position, and release the actuation lever 24 to travel to an opposite side of the actuation lever 24. Thus, in this example, the detector switch is actuated to provide a signal output lever arm 18B can engage and entrain the actuation lever 24 when transitioning between the first angular position to the second angular position, and vice versa. The detector switch 12 can be arranged to provide a first signal, e.g. an electrical connection of a first and second lead connected to the detector switch 12, when transitioning from the first angular position to the second angular position, and a different second signal, e.g. an electrical connection of the second and a third lead connected to the detector switch 12, when transitioning from the second angular position to the first angular position. It will be appreciated that the detector 12 may be arranged to provide other signals. It will be appreciated that the detector 12 can include other type of switches, such as a toggle switch, a rotary switch, a push button, and a limit switch.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. Mechanical shift interface for between a manual shifter and a shifting device of a bicycle transmission, comprising
a housing,
an input mechanism, provided in the housing, which input mechanism is configured for coupling to a shifter cable of the manual shifter, wherein the input mechanism is movable within the housing by operation of the shifter cable between a first state and a second state, and
a detector, provided in the housing, wherein the detector is arranged to detect whether the input mechanism is in the first state or the second state, and/or a transition of the input mechanism between the first state and the second state.

2. Mechanical shift interface according to claim 1, wherein the detector is arranged to generate an, e.g. analog, electronic output signal upon detecting the input mechanism in the first state or the input mechanism in the second state, and/or a transition of the input mechanism between the first state and the second state.

3. Mechanical shift interface according to claim 1 or 2, wherein the detector is arranged to generate a first output signal upon detecting the input mechanism in the first state, and a second output signal upon detecting the input mechanism in the second state; and/or wherein the detector is arranged to generate a first output signal upon detecting a transition of the input mechanism from the first state to the second state, and a second output signal upon detecting a transition of the input mechanism from the second state to the first state.

4. Mechanical shift interface according to any preceding claim, comprising a transmitter arranged for transmitting a wireless output signal, wherein the transmitter is optionally arranged in the housing.

5. Mechanical shift interface according to any preceding claim, wherein the detector comprises a detector switch, wherein optionally the detector switch comprises an actuation organ, and wherein the input mechanism is arranged to mechanically interact with the actuation organ so as to actuate the detector switch when transitioning between the first state and the second state.

6. Mechanical shift interface according to claim 5, wherein the actuation organ is biased in a neutral position and moveable out of the neutral position, wherein an engaging body of the input mechanism is arranged to, when transitioning between the first state and the second state, move the actuation organ out of its neutral position and subsequently release the actuation organ for allowing the actuation organ to return to the neutral position, the detector switch optionally being a two-way detector switch, wherein the actuation organ is biased in the neutral position and moveable out of the neutral position in two opposing directions.

7. Mechanical shift interface according to any of claims 5-6, wherein the actuation organ includes a pivotable actuation arm.

8. Mechanical shift interface according to any of claims 5-7, wherein the input mechanism comprises an input member for connection to, e.g. an end of, the shifter cable, wherein the input member is translatable relative to the housing, by operation of the shifter cable, between a first position which corresponds to the first state of the input mechanism, and a second position which corresponds to the second state of the input mechanism, wherein optionally the input mechanism comprises a lever defining an input lever arm connected to the input member and an output lever arm for engaging the actuating organ, and wherein the lever is pivotally arranged in the housing for transforming a translational motion of the input member between the first position and the second position into a pivotal motion of the output lever arm between respectively a first angular position and a second angular position, wherein optionally the input lever arm is shorter than the output lever arm, wherein optionally a distance between a pivot axis of the actuation arm of the detector switch and a pivot axis of the output lever arm is smaller than a sum of a length of the output lever arm and a length of the actuation arm.

9. Mechanical shift interface according to any preceding claim, wherein the input mechanism includes a cam track and a cam follower cooperating with the cam track, wherein optionally the cam track is formed by the input lever arm, and the cam follower is formed by the input member, wherein optionally the cam track includes a first notched section in which the cam follower is received when the input mechanism is in the first state, and a second notched section in which the cam follower is received when the input mechanism is in the second state, wherein optionally the first notched section is formed at a first end of the cam track, and wherein the cam track includes a second end opposite the first end, wherein a buffer section of the cam track is provided between the second end and the second notched section for accommodating a motion of the cam follower from the first end towards the second end beyond the second notched section.

10. Mechanical shift interface according to any one of claims 8-9, wherein a translation of the input member from the first position to the second position corresponds to a shifter cable tension increase, and a translation of the input member from the second position to the first position corresponds to a shifter cable tension decrease, wherein the input member is spring biased towards the first position, optionally comprising a first end stop for blocking a translation of the input member in a direction from the second position towards the first position beyond the first position, optionally comprising a second end stop, opposite the first end stop, for blocking a translation of the input member, wherein the second end stop is located a distance beyond the second position of the input member so as to accommodate for an over-tensioning of the shifter cable.

11. Mechanical shift interface according to any one of claims 8-10, wherein a translation range between the first position and the second position of the input member is within a range of 0.5-2.5 mm, preferably of 1-2 mm more preferably from 1.5-1.7 mm and/or comprising a damper for damping the pivotal motion of the lever.

12. Mechanical shift interface according to any one of claims 1-11, wherein the input mechanism is movable within the housing by operation of the shifter cable between the first state, the second state and one or more further states, and wherein the detector is arranged to detect in which state the input mechanism is, and/or a between which states the input mechanism transitions.

13. Mechanical shift interface according to any preceding claim, arranged to be mounted to a handlebar of a bicycle and/or to a brake cable of a bicycle.

14. Shifting system for a bicycle, comprising a manual shifter for operation by a user of the bicycle, the shifter including a shifter cable and a tensioning device for selectively tensioning and loosening the shifter cable; and a mechanical shift interface according to any preceding claim, wherein the shifter cable is connected to the input mechanism of the mechanical shift interface, optionally comprising a shifting device arranged for shifting gears in a transmission of the bicycle, wherein shifting device is electronically connected with the mechanical shift interface.

15. Bicycle comprising a mechanical shift interface according to any of claims 1-13 or a shifting system according to claim 14.
